Europäisches Patentamt

European Patent Office

Office européen des brevets

(19)

(11) Veröffentlichungsnummer: **0 444 402 A2**

# (12) EUROPÄISCHE PATENTANMELDUNG

(21) Anmeldenummer: **91100316.8**

(22) Anmeldetag: **11.01.91**

(51) Int. Cl.5: **G01S 17/88**

(30) Priorität: **24.02.90 DE 4005919**
**25.05.90 DE 4016973**

(43) Veröffentlichungstag der Anmeldung:
**04.09.91 Patentblatt 91/36**

(84) Benannte Vertragsstaaten:
**DE FR GB IT SE**

(71) Anmelder: **ELTRO GmbH Gesellschaft für Strahlungstechnik**
**Kurpfalzring 106 Postfach 10 21 20**
**W-6900 Heidelberg 1(DE)**

(72) Erfinder: **Wichmann, Günter**
**Bitterstrasse 3**
**W-6906 Heidelberg(DE)**
Erfinder: **Büchtemann, Wolf, Dr.**
**Neckarstrasse 12**
**W-7400 Tübingen(DE)**

(74) Vertreter: **Muschka, Wilhelm, Dipl.-Ing.**
**Eltro GmbH Gesellschaft für**
**Strahlungstechnik Kurpfalzring 106 Postfach**
**10 21 20**
**W-6900 Heidelberg 1(DE)**

(54) **Verfahren und Anordnung zum Ermitteln der Sichtweite für Autofahrer beim Auftreten von Nebel.**

(57) Verfahren zum Ermitteln der Sichtweite für Autofahrer beim Auftreten von Nebel unter Verwendung eines aus Sender und Empfänger bestehenden Entfernungsmessers. Für eine solche Sichtweiten-Ermittlung wird im Frontbereich eines Autos entweder **ein** in der Elevation verschwenkbarer Entfernungsmesser oder es werden ihrer mehrere starr übereinander liegend installiert, so daß im ersten Fall der Entfernungsmesser durch Verschwenken des Gerätes in Elevation und im anderen durch gleichzeitiges Abstrahlen aller Entfernungsmesser die in äquidistante Schritte unterteilte, unmittelbar vor dem Auto liegende Meßstrecke bestrahlt wird, wobei die Information darin besteht, daß nur von den vom Nebel bedeckten Meßpunkten der Fahrbahndecke keine Reflexion zum Empfänger hin erfolgt

Fig. 1

EP 0 444 402 A2

Die Erfindung bezieht sich auf ein Verfahren zum Ermitteln der Sichtweite für Autofahrer beim Auftreten von' Nebel nach dem Oberbegriff der Ansprüche 1 und 2 sowie auf eine Anordnung zur Durchführung dieses Verfahrens.

Aus der DE-PS 22 23 230 ist ein Verfahren zur Überwachung der Durchlässigkeit der Atmosphäre bekannt, bei dem entlang einer Autostraße im Abstand von etwa 50 bis 150 m mehrere jeweils mit Sender, Empfänger und Warntafel für entsprechende Anzeigen ausgerüstete Meßstellen vorgesehen sind. Sender und Empfänger einer Meßstelle weisen hierbei in entgegengesetzte Richtung und kommunizieren jeweils mit Empfänger bzw. Sender der nächsten Meßstelle. Das Signal wird hierbei von einer Lichtquelle, vorzugsweise einer im Infrarotbereich arbeitenden Lumineszenzdiode, erzeugt. Die auf der Wegstrecke vom Sender der einen Meßstelle zum Empfänger der nächsten Meßstelle auftretende Dämpfung der elektromagnetischen Strahlung durch Nebel wird gemessen. Sodann wird die Frequenz dieser Strahlung in jedem Meßabschnitt durch die Dämpfung des vorhergehenden Abschnitts festgelegt und schließlich wird aus der Dämpfung und der Frequenz der Strahlung in einem bestimmten Meßabschnitt eine am Anfang eines jeden Meßabschnitts erscheinende Anzeige abgeleitet, die Auskunft über eine etwaige Veränderung der Durchlässigkeit der Atmosphäre gegenüber dem Vorabschnitt erteilt. Eine solche an sich zuverlässig funktionierende Anlage ist ortsgebunden und wegen ihres Aufwands nur an bestimmten, besonders nebelgefährdeten Stellen einsetzbar.

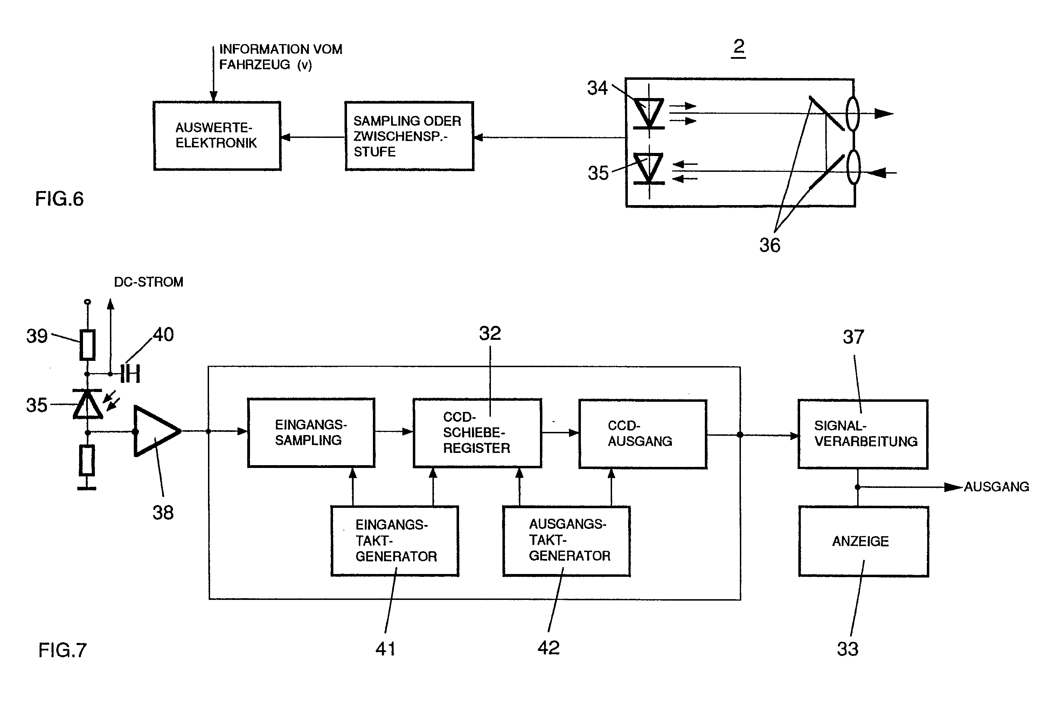

Die DE 32 15 845 C1 bzw. EP 0 092 825 zeigen und beschreiben in ihrer Fig. 7 einen aus mehreren Kanälen bestehenden Empfänger eines Abstandssensors für Geschoßzünder. Dieser Abstandssensor ist mit einem nach dem Impulslaufzeitverfahren arbeitenden Laserentfernungsmesser ausgerüstet, dessen Sender Impulse in Richtung Ziel abstrahlt. Außerdem enthält er der Anzahl der Meßstellen entsprechend viele Empfangsdioden, die die vom Ziel reflektierten Impulse in elektrische Signale umwandeln. Sodann enthält er eine Abtastschaltung, die über mit den Sendeimpulsen synchronisierte, gegenüber diesen jedoch kurz ausgebildete und in vorgegebener Weise verzögerte Abtastimpulse die Empfangssignale abtastet. Auf diese Weise wird im Fall einer Relativbewegung zwischen Sensor und Ziel und der damit verbundenen Phasenverschiebung zwischen Empfangssignalen und Nadelimpulsen eine Folge von Abtastwerten erzeugt, die die Amplitudenwerte aufeinanderfolgender Empfangssignale zu jeweils unterschiedlichen Zeitpunkten dieser Signale repräsentieren. Für die Überwachung eines Entfernungsbereiches ist sodann eine Phasenmodulation des Nadelimpulses notwendig, wie sie Fig. 8 und zugehöriger Beschreibung beider Druckschriften zu entnehmen ist. Der Impulsgenerator kann dabei als Trigger für eine Monoflopstufe verwendet werden, deren Zeitkonstante durch eine Modulationsspannung variiert wird. Aus der Rückflanke des Monoflopimpulses wird dann der Nadelimpuls gewonnen. Von dieser Technik wird in der vorliegenden Erfindung Gebrauch gemacht.

Aufgabe der Erfindung ist es, für den Autofahrer mit weitgehend herkömmlichen Mitteln eine Möglichkeit zu schaffen, bei Sehbehinderung durch Nebel die bestehende Sichtweite abschätzen zu können. Diese Aufgabe wird erfindungsgemäß durch die in den Ansprüchen 1 und 2 genannten Merkmale gelöst. Eine solche Möglichkeit, die sich bedarfsweise auch noch dahingehend erweitern läßt, daß man die Relativgeschwindigkeit zu einem vorausgehenden Fahrzeug feststellen kann, ist bisher nicht auf dem Markt.

Im folgenden werden an Hand einer Zeichnung Ausführungsbeispiele der Erfindung näher erläutert, wobei die in den einzelnen Figuren einander entsprechenden Teile dieselben Bezugszahlen aufweisen. Es zeigt

Fig. 1    eine Prinzipskizze des erfindungsgemäßen Verfahrens,

Fig. 2    das Impulsdiagramm eines herkömmlichen, in der HF-Oszillographie verwendeten Abtastverfahrens mittels eines Nadelimpulses,

Fig. 3    das Blockschaltbild des Empfängers bei gleichzeitiger Bestrahlung mehrerer Meßpunkte der Fahrbahndecke,

Fig. 4    das Blockschaltbild für die Bestrahlung eines ganzen Entfernungsbereiches,

Fig. 5    eine weitere Prinzipskizze des erfindungsgemäßen Verfahrens mit eingezeichneten Berechnungsdaten,

Fig. 6    das generelle Prinzip-Blockschaltbild für Beispiel gemäß Fig. 5,

Fig. 7    das empfangsseitige Blockschaltbild für Beispiel gemäß Fig. 5 und

Fig. 8    einen speziellen Anwendungsfall der Erfindung für die eine Fahrtrichtung einer Autobahn.

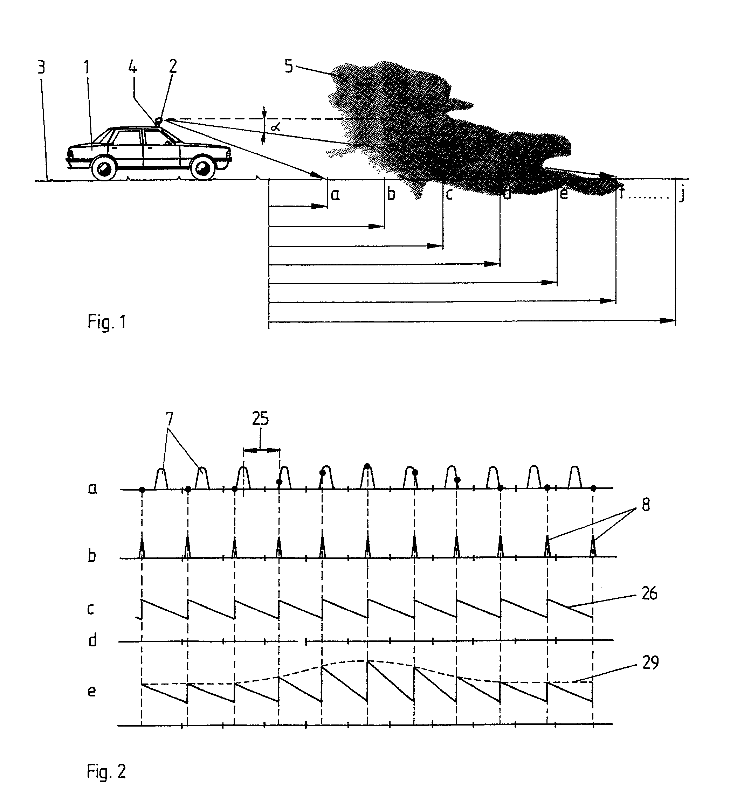

Im Frontbereich des Autos 1 der Fig. 1 ist ein aus Sender und Empfänger bestehender und nach dem Impulslaufzeitverfahren arbeitender Entfernungsmesser 2, der z.B. ein Laserentfernungsmesser sein kann, befestigt. Dieser Entfernungsmesser ist auf die auf einem entsprechenden Tableau in äquidistante Schritte a bis j unterteilte Fahrbahndecke 3 ausgerichtet und in dem Gelenk 4 um Winkel α in der Elevation verschwenkbar, und zwar entweder kontinuierlich oder stufenweise. Dieselbe Bewegung kann in vielen Fällen, und zwar zumeist sogar eleganter, mittels eines hier zeichnerisch allerdings nicht dargestellten

EP 0 444 402 A2

Abtastspiegels ausgeführt werden. Solange bei einem solchen Verschwenkvorgang die Fahrbahndeck 3 in allen Positionen des Entfernungsmessers ein ausreichend hohes Signal zum Empfänger reflektiert, ist die Reichweite, die angenähert der Sichtweite entspricht, größer als die gesamte Meßstrecke j, so daß der Fahrer ungehindert zufahren kann. Reflektiert hingegen beispielsweise nur noch das Signal von Punkt a, weil sich das Auto nämlich der Nebelwand 5 nähert, so bedeutet dies, daß die Sichtweite bereits kleiner als die Meßstrecke b ist und für den Autofahrer somit größte Vorsicht geboten ist.

Bei einem anderen, zeichnerisch nicht dargestellten Ausführungsbeispiel können im Frontbereich des Autos 1 auch mehrere Entfernungsmesser 2 übereinander und mit unterschiedlichen, jedoch gegeneinander abgestuften Neigungswinkeln α zur Fahrbahndecke 3 montiert sein. In diesem Fall werden gleichzeitig mehrere Meßstrahlen ausgesandt, so daß sich für den Autofahrer im Endeffekt die gleiche Information ergibt. Es liegt auf der Hand, daß beide aufgezeigten Varianten nur funktionieren, wenn der Straßenverlauf vor dem Fahrzeug im Bereich der Meßentfernung gerade verläuft. Der Autofahrer darf demnach die Vorrichtung sinnvoll nur betätigen, wenn er sich auf einem geraden Stück Wegstrecke glaubt.

Mit der bisher beschriebenen Sichtweitmessung läßt sich im Bedarfsfall auch eine Messung der relativen Geschwindigkeit zwischen dem Auto 1 mit seinem Entfernungsmesser 2 und dem Ziel kombinieren. Hierbei zeigen dann alle auf die Fahrbahndecke 3 ausgerichteten Messungen unter Ausnutzung des Dopplereffekts die Fahrzeuggeschwindigkeit. Befindet sich jedoch zwischen Entfernungsmesser und Fahrbahndecke ein Hindernis 5, so wird einerseits durch dieses Hindernis die Sichtweite und zum anderen auch die Relativgeschwindigkeit des eigenen Autos in bezug auf dieses Hindernis bestimmt bzw. angezeigt - ausreichende Sichtweite vorausgesetzt. Dies bedeutet, daß auf diese Weise mit dem Entfernungsmesser bei Abwesenheit von Nebel auch die Relativgeschwindigkeit vorausfahrender Fahrzeuge ermittelt werden kann.

Da nun aber komplette Laserentfernungsmesser als Massenprodukt der Autoindustrie noch vergleichsweise teuer sind, bietet sich eine - für den vorgesehenen Zweck immer noch ausreichend genaue - Sichtweitenmessung mit folgenden Gerätekomponenten unter Ausnutzung des optoelektronischen Verfahrens gemäß DE 32 15 845 C1 bzw. EP 0 092 825 an: In Fig. 2a soll ein Signal, dessen Folgefrequenz bekannt ist, empfangen werden. Zu diesem Zweck wird gemäß Fig. 2b ein Empfangstast- oder Nadelimpuls 8 (im Laborjargon auch als Samplingimpuls bezeichnet) erzeugt, der die gleiche Folgefrequenz aufweist wie der zu empfangende Signalimpuls, jedoch gegenüber diesem phasenmoduliert ist. Hierdurch trifft er von Periode zu Periode mit einem anderen Momentanwert des Signalimpulses zusammen. Über eine Diode - es sind dies die Samplingdioden 6 bis

$$6\frac{X}{}$$

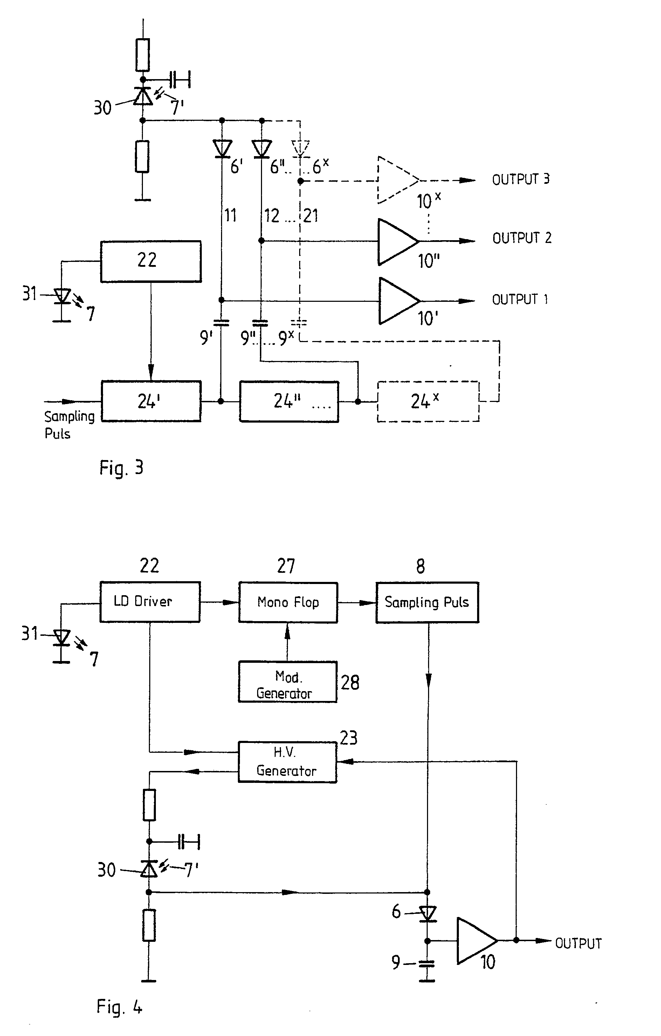

der Fig. 3 - werden beide Impulse, Signalimpuls 7 und Nadelimpuls 8, auf einen Kondensator - in Fig.3 die Kondensatoren 9 bis

$$9\frac{X}{}$$

- gegeben, so daß am Ausgang des zwischen Diode und Kondensator geschalteten Verstärkers - in Fig. 3 die Positionen 10 bis

$$10\frac{X}{}$$

- die aus Fig. 2c ersichtliche Sägezahnspannung 26 entsteht, deren Spitzenamplitude der Summe beider Momentanwerte entspricht. Wäre das Eingangssignal Null, so würde sich ein Spannungsverlauf nach Fig. 2d ergeben. Bei Vorhandensein des Signalimpulses entsteht ein niederfrequentes Signal 29, das gemäß Fig. 2e einem zeitlich gedehnten Originalimpuls entspricht. Das in diesem Absatz Gesagte ist Stand der Technik und dient lediglich der Erläuterung des sogenannten Samplingverfahrens, das im Rahmen der vorliegenden Erfindung wie folgt zum Einsatz gelangt:

Sollen z.B. Sichtweiten bis etwa 100 m erfaßt werden, kann man gemäß Fig. 1 und 3 den zehn Meßpunkten a bis j der Fahrbahndecke 3 zehn Empfangskanäle 11 bis 21 zuordnen, deren zugehörige Nadelimpulse 8 gegenüber den Sendeimpulsen 7 zeitlich so verzögert werden, daß sie mit den aus 10, 20, 30 ... 100 m Entfernung reflektierten Sendeimpulsen zusammenfallen. Wird nun der das Sendesignal enthaltende Meßstrahl des Senders über einen Abtastspiegel (zeichnerisch nicht dargestellt) so abgelenkt,

3

daß er zunächst in 100 m Entfernung auf die Fahrbahndecke 3 trifft und dann durch Kippen des Spiegels immer näher kommt, so wird der Nadelimpuls nacheinander über die Empfangsimpulse 7' der zehn Kanäle 11 bis 21 laufen, wobei jeder Kanal das Eintreffen seines Nadelimpulses meldet. Die sonst notwendige Phasenmodulation des Nadelimpulses ist hier also nicht nötig. Eine überwachungselektronik braucht jetzt nur noch festzustellen, welcher Kanal noch Signale erhalten hat.

Die hierzu und zum Verständnis erforderliche Elektronik ist wieder Teil des vorerwähnten Samplingverfahrens und somit nicht Gegenstand der Erfindung. Hierbei erzeugt der Impulsgenerator 22 (Fig. 3) eine Spannung, so daß die Sendediode 31 nach optoelektronischer Umwandlung den Signalimpuls 7 (Fig. 2) aussendet. Ein kleiner Teil der impulsförmigen Treiberspannung wird ausgekoppelt und nach Durchlaufen der Verzögerungsglieder 24' bis

$$24^{\overline{X}}$$

als Nadelimpuls 8 gemäß Fig. 2b verwendet. Die Verzögerungszeiten 25 (Fig. 2) werden dabei so eingestellt, daß sie dem zu detektierenden vorbestimmten Weg der Signalimpulse von der Sendediode 31 zum Ziel, sprich Fahrbahndecke 3, und wieder zurück zur Empfangsdiode 30 entsprechen.

Fährt ein mit einem solchen Sensor ausgerüstetes Auto 1 eine Straße entlang, so wird kein Signal empfangen, solange es nicht mit dem Nadelimpuls 8 zusammentreffen kann. Durch die Bewegung des Abtastspiegels, läuft das von der Fahrbahndecke 3 reflektierte Signal mit der Spiegelbewegung über den Nadelimpuls hinweg und wird von diesem abgetastet.

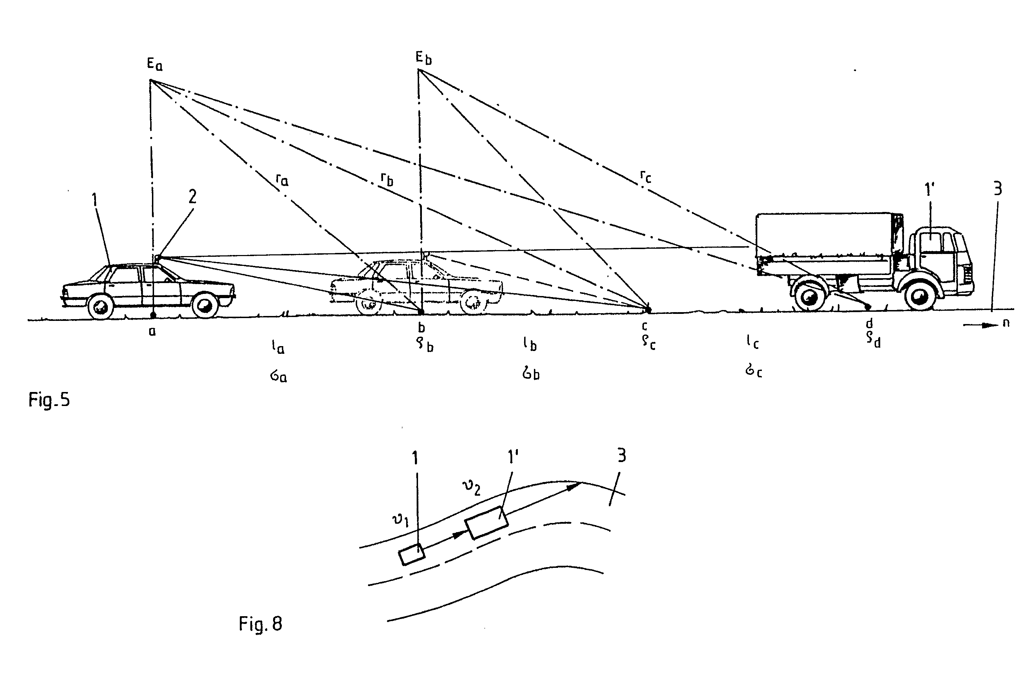

Um die vorstehend erwähnte Relativgeschwindigkeit zu ermitteln, muß das Gerät in einen anderen Betriebsmode geschaltet werden. Hierbei steht der Abtastspiegel still, und zwar in derjenigen Position, die der weitesten Entfernung entspricht. Jetzt braucht nur noch einer der zehn Empfangskanäle 11 bis 21 benutzt werden. Hierfür ist zunächst eine gleichfalls wieder für sich genommen aus DE 32 15 845 C1 und EP 0 092 825 bekannte Phasenmodulation des Nadelimpulses 8 gemäß Fig. 4 notwendig. Der Impulsgenerator 22 kann dabei als Trigger für die Monoflopstufe 27 verwendet werden, deren Zeitkonstante durch eine Modulationsspannung des Modulationsgenerators 28 variiert wird. Aus der Rückflanke des Monoflopimpulses wird dann wieder der Nadelimpuls gewonnen. Der zu überwachende Bereich kann hierbei beliebig eingestellt werden. Er kann sowohl von Punkt "a" bis zur maximalen Reichweite "j" als auch auf einen Bereich zwischen zwei Entfernungen eingestellt werden. Hierbei wird - je nach Vorgabe - entweder die Impulsbreite gemessen oder aber es finden mehrere Entfernungsmessungen statt, wobei dann die Unterschiede in den einzelnen Entfernungen gemessen werden müssen. Im ersten Fall enthält die Umhüllende des Signals die Information über die gesuchte Relativgeschwindigkeit, während sie sich im zweiten Fall aus der erfolgten Weg- und Zeitmessung ergibt.

Bei einem weiteren, zeichnerisch nicht dargestellten Ausführungsbeispiel läßt sich der Abtastspiegel in folgender Weise ersetzen: Mit irgendwelchen optischen Mitteln, z.B. einer zylindrischen Linse, werden Sende- und Empfangsstrahl in vertikaler Richtung so aufgeweitet, daß alle zehn Meßpunkte a bis j erfaßt werden. Vor oder hinter der Optik ist ein Chopper angeordnet, der den Sende- oder Empfangsstrahl in einfacher Weise dergestalt moduliert, daß etwa im 100-Hz-Rhythmus in allen 10 Kanälen (11 - 21) eine Ja/Nein-Aussage über evtl. in der Meßstrecke vorhandene Hindernisse entsteht.

In Fig. 5 fährt der mit ausgezogener Linienführung dargestellte PKW 1 mit einem bestimmtem Abstand hinter dem LKW 1'. Im Frontbereich des PKWs ist der nach dem Impulslaufzeitvefahren arbeitende Lasersende- und Empfangsmodul 2 befestigt, dessen optische Achse sich durch ein zeichnerisch nicht näher dargestelltes opto-mechanisohes oder elektrooptisches Element in einer zur Fahrtrichtung vertikalen Ebene verschwenken läßt. Die hierbei auftretenden Reflexionen in den Positionen a bis n der Fahrbahndecke 3 werden im Inneren des PKWs nach entsprechender optoelektronischer Umformung und Signalverarbeitung auf der Anzeige 32 (Fig. 7) visuell und/oder akustisch dem Autofahrer kenntlich gemacht. Die Signalverarbeitung kann eine Dehnung und Mittelung des reflektierten Signals über eine Reihe aufeinanderfolgender Laserimpulse einschließen wie dies unter dem Begriff des Samplingverfahrens verstanden wird. Insofern handelt es sich um bekannten Stand der Technik.

Die Ausgangsleistung P wird vorzugsweise durch die Empfangsdiode 35 (Fig. 6 und 7) mittels der Lichtbrücke 36 gemessen, die über einen Satz halbdurchlässiger Spiegel oder - bei einem anderen, zeichnerisch nicht dargestellten Ausführungsbeispiel - durch eine Glasfaserverbindung einen definierten Teil der Ausgangsstrahlung auf die Empfangsdiode lenkt. Das empfangene, auf P normierte Signal E/P ist abhängig von der Entfernung $r_i$, bei der die Reflexion erfolgt, von dem Reflexionskoeffizienten $\rho$ der Fahrbahndecke 3 und dem Extinktionskoeffizienten $\sigma$ der Atmosphäre und ergibt sich rechnerisch zu:

$$\frac{E}{P} = \frac{\rho}{\pi \cdot r_i^2}\ e^{-2r_i\ \sigma} = \frac{\rho}{\pi\ r_i^2}\ e^{-2r_i\ \frac{k}{V_n}} \tag{1}$$

wobei

$r_i$ =     Entfernung der reflektierenden Fläche vor dem PKW

$\rho$ =     Reflexionskoeffizient der Fahrbahndecke

$\sigma$ =     Extinktionskoeffizient der Atmosphäre

$V_n$ =     Normsichtweite, d.h. diejenige Strecke, auf der die Transmission den Wert 2 % (oder 5 %) annimmt.

Grundsätzlich sind nur Sichtweiten von maximal ca. 200 m von Interesse. Die genaue Entfernung $r_i$ ist über die Laufzeit bekannt, während ein genauer Wert des Reflexionskoeffizienten $\rho$ bei richtiger Wahl der Entfernung von untergeordnetem Einfluß ist. Am einfachsten dürfte es ein, wenn man für $\rho$ eine plausible Annahme trifft. Bei der Berechnung des Extinktionskoeffizienten $\sigma$ dagegen eliminiert man gemäß Gleichung (5) den a priori unbekannten Reflexionskoeffizienten $\rho$ durch Messung der Reflexion vom selben Ort - z.B. von Position c in Fig. 1 - aus unterschiedlicher Entfernung. Hiervon abgesehen ist der Wert des empfangenen Signals E/P ein direktes Maß für den Extinktionskoeffizienten $\sigma$, wobei letzterer mit der Normsichtweite $V_n$ durch die Beziehung $V_n = k/\sigma$ verknüpft ist.

Gleichung (1) bedeutet in Anwendung auf Fig. 1:

$$E_{ab} = \frac{P\ \rho_b}{\pi\ l_a^2}\ e^{-2\ \sigma_a l_a} \tag{2}$$

$$E_{ac} = \frac{P\ \rho_c}{\pi\ (l_a + l_b)^2}\ e^{-2\ (\sigma_a l_a + \sigma_b l_b)} \tag{3}$$

$$E_{bc} = \frac{P\ \rho_c}{\pi\ l_b^2}\ e^{-2\sigma_b l_b} \tag{4}$$

Durch Quotinetenbildung der Gleichungen (2) und (3) ergibt sich bei konstanter Ausgangsleistung P :

$$\frac{E_{ac}}{E_{bc}} = \frac{l_b}{(l_a + l_b)^2}\ e^{-2\sigma_a l_a} \tag{5}$$

Eine größere Effektivität und Flexibilität läßt sich nun gemäß der Erfindung durch folgende die Signalverarbeitung 37 der Fig. 7 betreffende Maßnahmen erzielen: Nach Detektion des Signals durch die Empfangsdiode 35, seiner optronischen Umwandlung und seiner Verstärkung im Vorverstärker 38 wird das Signal dem CCD-Schieberegister 32 (CCD = Charge Coupled Device), einem Ladungskoppelelement, zugeführt. Letzteres verfügt über zwei getrennte Eingangs-/Ausgangs-Taktgeneratoren 10 und 11.

Wird nun das CCD-Schieberegister 32 z.B. mit einem Eingangstakt von 100 MHz geladen, so wird bei 128 verfügbaren Stufen ein Zeitraum von 1,28 $\mu$s gespeichert, was einer Entfernung von 192 m entspricht (Auflösung: 10 ns = 1,5 m). Wird das CCD-Schieberegister dagegen mit einer Taktrate von nur 5 MHz ausgelsen (Signaldehnung: Faktor 20), so kann - als zweiter Schritt - eine Weiterverarbeitung mit Bausteinen geringerer Bandbreite und damit auch geringerer Kosten durchgeführt werden. Die Gesamtauslesezeit beträgt im angenommenen Beispiel 25,6 $\mu$s, was an die maximale Laser-Pulsfolgefrequenz gut angepaßt ist.

Als weitere (analoge und/oder digitale) Signalverarbeitung kann nun die an sich bekannte und vorstehend bereits erwähnte Mittelung über mehrere Laserimpulse bis ca. 100 ms sowie die Ermittlung einer

5

Ausgangskurve für Signale als Funktion verschiedener Entfernungen erfolgen. Hieraus ergibt sich ein Verlauf, der für den Extinktionskoeffizienten $\sigma$ typisch ist. Bei geeigneter Signalverarbeitung, speziell einer sogenannten $r^2$-Korrektur, ist die Ausgleichskurve eine Gerade, sofern die atmosphärischen Bedingungen konstant sind. Abweichungen hiervon lassen im Fall von Nebel darauf schließen, daß derselbe in einer bestimmten Entfernung vor dem PKW 1 (Fig. 5) dichter zu werden beginnt. Unter $r^2$-Korrektur versteht man die Multiplikation der Signale mit dem Quadrat der Entfernung. Bei konstanten Umgebungsbedingungen und einer halblogarithmischen Darstellung ergibt sich eine lineare Abhängigkeit. Die Steigung dieser Geraden ist direkt proportional dem Extinktionskoeffizienten $\sigma$. Eine elektronische, prozessorgestützte Auswertung der Signale aus verschiedenen Entfernungen erlaubt eine Bestimmung von $\sigma$ ohne vorausgehende Bestimmung von E/P. Für die Praxis ergibt sich dadurch die Möglichkeit einer Früherkennung vor dichter werdendem Nebel.

Fährt z.B. der PKW 1 in Fig. 5 von Position a nach Position b und betrachtet man die Signale, die von Position c kommen, so rührt die Änderung des Signals - von geometrischen Faktoren abgesehen - nur von der Änderung der atmosphärischen Dämpfung her, das heißt der Reflexionsfaktor $\rho$ hat keinen Einfluß auf eine Änderung (genauer: den Quotienten) der Signale(s.Gl. 5). Hiermit läßt sich der Extinktionskoeffizient $\sigma$ genauer bestimmen und damit wiederum der Reflexionsfaktor $\rho$ der Fahrbahndecke 3. Derselbe hängt speziell bei flachem Einfalls- und Beobachtungswinkel im wesentlichen vom witterungsbedingten Straßenzustand, also der Trockenheit, Nässe oder einem eventuellen Eisbelag ab. Diese Methode ermöglicht demnach prinzipiell auch eine Aussage über die für einen Kraftfahrer wichtigen Zustandsverhältnisse der von ihm befahrenen Fahrbahndecke.

Bei einem anderen, zeichnerisch nicht dargestellten Ausführungsbeispiel ist es ferner vorstellbar, daß das Empfangsmodulteil mit einer Polarisationsweiche ausgerüstet ist, so daß dann separat reflektierte Strahlung mit einer Polarisationsachse parallel zum linear polarisierten Sendestrahl und senkrecht zu diesem gemessen werden kann. Auf diese Weise wird der Depolarisationsgrad der Strahlung festgestellt, der auch wieder vom Zustand der Fahrbahndecke abhängt: Eine trockene Fahrbahn bewirkt eine starke, eine nasse oder vereiste Fahrbahn dagegen eine geringere Depolarisation.

Die Sichtweite kann mit den vorgeschlagenen Maßnahmen auch bestimmt werden, wenn die Strahlung von dem vorausfahrenden LKW 1' (Fig. 5) oder von anderen Objekten auf oder neben der Fahrbahn 3 reflektiert wird. Entspricht hierbei die Geschwindigkeit nicht der Sichtweite, wird der Fahrer über die Anzeige 12 und/oder gegebenenfalls auch akustisch gewarnt.

Ein zusätzliches Problem bei herkömmlichen Kollisionswarnsystemen ergibt sich durch die Falschalarme. Im anstehenden Fall bietet sich hierfür folgende Umgehungsmöglichkeit an: Man geht davon aus, daß Hindernisse, deren Entfernung deutlich kleiner als die Sichtweite ist, gesehen werden, so daß in diesen Fällen eine Warnung nicht notwendig ist. Gefährlich sind hingegen Objekte, die bei nicht angepaßter Geschwindigkeit eine Entfernung haben, die in etwa der Sichtweite entspricht oder deren Entfernung größer als die Sichtweite ist. Letzterer Fall setzt natürlich voraus, daß das Sichtweitemeßsystem eine Reichweite besitzt, die größer ist als diejenige der Sichtweite. Das Ausführungsbeispiel gemäß Fig. 8 möge dies verdeutlichen:

Das Meßsystem des hinteren Fahrzeugs 1 mit der Geschwindigkeit $v_1$ wird eine Warnung abgeben, wenn die Relativgeschwindigkeit zum Fahrzeug 1', $v_1 - v_2$, einen sichtweiteabhängigen Wert überschreitet. Das System des Fahrzeugs 2 warnt, wenn die Straße - wie dargestellt - eine scharfe Biegung macht, die Biegung nicht oder nicht sofort gesehen werden kann und gleichzeitig die Geschwindigkeit zu hoch ist. Hindernisse können hier durch die in Fig. 5 angedeutete Diskontinuität der Entfernung - PKW 1 ist in zwei Entfernungen zum vorausfahrenden LKW 1'dargestellt - erkannt werden: Das System tastet die Meßpunkte a bis n ab. Hierbei vergrößert sich bei freier Straße die Entfernung in systematischer Weise, wobei der genaue Verlauf zwar von Änderungen der Straßenneigung und dem Nickwinkel des Fahrzeugs abhängt, der generelle Verlauf aber vergleichbar ist. Ein Hindernis unterbricht diesen Verlauf und wird dadurch als solches erkannt.

Die Normsichtweite $V_n$ schließlich ist eine eindeutig definierte Größe. Die tatsächliche visuell relevante Sichtweite hängt von verschiedenen Umweltparametern ab, wie z.B. der Umgebungshelligkeit bzw. der Helligkeit der Fahrbahndecke. Diese kann in einfacher Weise durch Messen des DC-Stroms an dem Leitungszweig 39, 40 in Fig. 7 ermittelt und zur Berechnung der reellen Sichtweite verwendet werden.

**Patentansprüche**

1. Verfahren zum Ermitteln der Sichtweite für Autofahrer beim Auftreten von Nebel unter Verwendung eines aus Sender und Empfänger bestehenden Entfernungsmessers, **dadurch gekennzeichnet,** daß der Entfernungsmesser (2) im Frontbereich eines Autos (1) befestigt, über eine in äquidistante Schritte a bis j untereilte, unmittelbar vor dem Auto liegende Meßstrecke in der Elevation verschwenkt und das hierbei ausgesendete Signal nur an den vom Nebel (5) bedeckten Meßpunkten der Fahrbahndecke (3) nicht zum Empfänger hin reflektiert wird.

2. Verfahren zum Ermitteln der Sichtweite für Autofahrer beim Auftreten von Nebel unter Verwendung eines aus Sender und Empfänger bestehenden Entfernungsmessers, **dadurch gekennzeichnet,** daß im Frontbereich eines Autos (1) mehrere Entfernungsmesser (2) mit unterschiedlichem Neigungswinkel $\alpha$ zur Fahrbahndecke (3) übereinander liegend befestigt und auf die Meßpunkte a bis j einer in äquidistante Schritte unterteilten, unmittelbar vor dem Auto liegenden Meßstrecke gleichzeitig mehrere Signale so abgestrahlt werden, daß sie nur an den vom Nebel (5) bedeckten Meßpunkten der Fahrbahndecke nicht zum zugehörigen Empfänger reflektiert werden.

3. Verfahren nach Anspruch 1 oder 2, **dadurch gekennzeichnet,** daß ein Entfernungsmesser (2) gekoppelt mit einem Geschwindigkeitsmesser verwendet wird, mit dem unter Ausnutzung des Dopplereffekts bei freier Sicht die Relativgeschwindigkeit zu einem zwischen Entfernungsmesser und Fahrbahndecke (3) befindlichen Hindernis (5) gemessen wird.

4. Verfahren nach Anspruch 1 oder 2 und unter Verwendung eines an sich bekannten Abstandssensors, der sich zusammensetzt aus

- einem Sender zum Ausstrahlen von Sendeimpulsen,
- einer Abtastschaltung zur Abtastung der Empfangssignale (7') durch mit den Sendeimpulsen (7) synchronisierte, gegenüber diesen jedoch in vorgegebener Weise Verzögerte Abtastimpulse,
- der Anzahl der Meßstellen a bis j entsprechend vielen Samplingdioden

$$(6' \text{ bis } 6^{\overline{X}})$$

zur Umsetzung der durch die Empfangsdiode 30 in elektrische HF-Signale gewandelte Sichtimpulse in niederfrequente Impulsabbildungen (29),
**dadurch gekennzeichnet,** daß
a) der Sende- und Empfangsimpuls (7; 7') mit Hilfe eines Abtastspiegels über die in äquidistanten Abständen voneinander entfernten Meßpunkte a bis j der Fahrbahndecke (3) - angefangen vom entferntesten bis hin zum nächstliegenden oder umgekehrt - gelenkt wird,
b) die Abtast- bzw. Nadelimpulse (8) gegenüber den Sendeimpulsen (7) zeitlich so verzögert werden, daß sie mit den von den Meßpunkten a bis j der Fahrbahndecke (3) reflektierten Sendeimpulsen zusammenfallen und
c) zum Feststellen der Sichtweite mittels einer überwachungselektronik die Kanäle (11 bis 21) ermittelt werden, die noch Signale erhalten haben.

5. Verfahren nach Anspruch 4 und unter Verwendung eines Impulsgenerators (22) als Trigger für einen Monoflop (27), dessen Zeitkonstante durch die Spannung eines Modulationsgenerators (28) variiert wird, wobei aus der Rückflanke des Monoflopimpulses der Nadelimpuls (8) gewonnen wird, **dadurch gekennzeichnet,** daß zum Ermitteln der Relativgeschwindigkeit der Abtastspiegel angehalten nurmehr **ein** Empfangskanal benutzt, der Nadelimpuls (8) phasenmoduliert und aus der Umhüllenden (29) des niederfrequenten Impulsabbildes die Information für die Relativgeschwindigkeit gewonnen wird.

6. Verfahren nach einem der vorausgehenden Ansprüche, **dadurch gekennzeichnet,** daß
a) für Signale als Funktion unterschiedlicher Entfernungen unter Zuhilfenahme einer sogenannten $r^2$-Korrektur eine Ausgleichskurve ermittelt wird, deren geometrische Beschaffenheit eine Frühwarnung vor dichter werdendem Nebel ermöglicht,
b) zwecks Bestimmung der Normsichtweite $V_n$ der mit ihr mathematisch verknüpfte Extinktionskoeffizient $\sigma$ aus dem Verhältnis von ausgestrahlter zu empfangener Leistung P/E ermittelt wird und/oder
c) das empfangene und optronisch umgeformte Signal einem CCD-Schieberegister (32) zugeführt und über dessen Speicherzeit auf die Entfernung zu einem vor dem Autofahrer befindlichen Hindernis geschlossen wird.

7. Verfahren nach Anspruch 6, **dadurch gekennzeichnet,** daß über den Extinktionskoeffizienten $\sigma$ der

Reflexionsfaktor ρ der Fahrbahndecke (3) sowie über Umweltparameter, wie die Umgebungshelligkeit bzw. die Helligkeit der Fahrbahndecke, die visuell relevante Sichtweite bestimmt werden.

8. Verfahren nach Anspruch 6, **dadurch gekennzeichnet,** daß mit Hilfe einer Polarisationsweiche die von der Fahrbahndecke (3), dem vorausfahrenden Fahrzeug (1') oder einem anderweitigen Hindernis separat reflektierte Strahlung parallel zur linear polarisierten Sendestrahlung und senkrecht zu dieser gemessen wird.

9. Verfahren nach Anspruch 7, **dadurch gekennzeichnet,** daß die Umgebungshelligkeit bzw. die Helligkeit der Fahrbahndecke (4) als Funktion des DC-Stroms an dem Leitungszweig (39, 40) der Empfangsdiode (6) gemessen wird.

10. Anordnung zur Durchführung des Verfahrens nach einem der vorausgehenden Ansprüche, **dadurch gekennzeichnet,** daß im Frontbereich eines Autos (1), vorzugsweise oberhalb seiner Frontscheibe, ein in der Elevation um ein Gelenk (4) verschwenkbarer Entfernungsmesser (2) angeordnet ist, dessen Sender die in äquidistante Schritte a bis j unterteilte Fahrbahndecke (3) so beleuchtet, daß ein nicht durch Hindernisse (5) abgeschattetes Signal auf den Empfänger reflektiert.

11. Anordnung nach Anspruch 4 und 10, **dadurch gekennzeichnet,** daß der Entfernungsmesser (2) starr angeordnet und ihm entweder ein Abtastspiegel oder aber ein die Strahlung über die äquidistanten Schritte a bis j aufweitendes Mittel, z.B. eine zylindrische Linse, optisch vorgeschaltet ist und für den Fall daß die Abtast- bzw. Nadelimpulse (8) gegenüber den Sendeimpulsen (7) zeitlich so verzögert werden, daß sie mit den von den Meßpunkten a bis j der Fahrbahndecke (3) reflektierten Sendeimpulsen zusammenfallen, mittels eines Choppers auf allen Empfangskanälen (11 bis 21) eine Ja/Nein-Aussage bewirkt wird.

12. Anordnung nach einem der Ansprüche 1 bis 5, **dadurch gekennzeichnet,** daß im Frontbereich eines Autos (1), vorzugsweise oberhalb seiner Frontscheibe mehrere Entfernungsmesser mit unterschiedlichem Neigungswinkel α zur Fahrbahndecke (3) übereinander liegend angeordnet sind, deren Sender die in äquidistante Schritte a bis j unterteilte Fahrbahndecke (3) so beleuchten, daß nur die nicht durch Hindernisse (5) abgeschatteten Signale auf den Empfänger reflektieren.

13. Schaltungsanordnung zur Durchführung des Verfahrens nach einem der Ansprüche 6 bis 9, **dadurch gekennzeichnet,** daß die von einer Sendediode (34) des Lasersende- und Empfangsmoduls (2) ausgestrahlte Leistung P mittels einer Empfangsdiode (35) dieses Moduls über eine Lichtbrücke (36) gemessen wird, die ihrerseits einen definierten Teil der Ausgangsstrahlung über die Empfangsdiode, eine Vorverstärkung (38), das CCD-Schieberegister (32, 41, 42) und die Signalverarbeitung (37) führt sowie das Ergebnis auf der Anzeige (33) sichtbar macht.

14. Schaltungsanordnung nach Anspruch 13, **dadurch gekennzeichnet,** daß die Lichtbrücke (36) für die Ermittlung der Ausgangsstrahlung P aus einer Glasfaserverbindung oder einem Satz halbdurchlässiger Spiegel besteht.

15. Schaltungsanordnung nach Anspruch 13, **dadurch gekennzeichnet,** daß das CCD-Schieberegister (32) über zwei getrennte Eingangs- bzw. Ausgangs-Taktgeneratoren (41; 42) verfügt.

16. Schaltungsanordnung nach einem der vorausgehenden Ansprüche, **dadurch gekennzeichnet,** daß dem Empfangsmodulteil eine Polarisationsweiche integriert ist.

Fig. 1

Fig. 2

Fig. 3

Fig. 4

Fig. 5

Fig. 8

EP 0 444 402 A2

EP 0 444 402 A2

INFORMATION VOM
FAHRZEUG (v)

<u>2</u>

AUSWERTE-
ELEKTRONIK

SAMPLING ODER
ZWISCHENSP.-
STUFE

34

35

36

FIG.6

DC-STROM

39

40

35

38

41

42

32

EINGANGS-
SAMPLING

CCD-
SCHIEBE-
REGISTER

CCD-
AUSGANG

EINGANGS-
TAKT-
GENERATOR

AUSGANGS-
TAKT-
GENERATOR

37

SIGNAL-
VERARBEITUNG

AUSGANG

ANZEIGE

33

FIG.7